# EUROPÄISCHE PATENTSCHRIFT

(11) **EP 2 767 158 B1**
(45) Veröffentlichungstag und Bekanntmachung des Hinweises auf die Patenterteilung: **13.12.2017**
(21) Anmeldenummer: 14000222.1
(22) Anmeldetag: 22.01.2014
(51) Int. Cl.: A01K 39/02

(54) **Tiertränke**
Watering trough for animals
Abreuvoir

(30) Priorität: 13.02.2013 DE 102013002394
(43) Veröffentlichungstag der Anmeldung: 20.08.2014
(73) Patentinhaber: LUBING Maschinenfabrik Ludwig Bening GmbH & Co. KG, 49406 Barnstorf (DE)
(72) Erfinder: Willis, Timothy Shawn, Cleveland, Tennessee 37323 (US); Willis, Charles Ollin, Cleveland, Tennessee 37323 (US); Hicks, Barry Dustin, Georgetown, Tennessee 37336 (US)
(74) Vertreter: Möller, Friedrich

(56) Entgegenhaltungen:
- EP-A1- 0 332 852
- DE-U1- 9 315 617
- DE-U1-202005 020 411
- US-A- 5 660 139

## Beschreibung

Die Erfindung betrifft eine Tiertränke gemäß dem Oberbegriff des Anspruchs 1.

Geflügel, wie zum Beispiel Puten, Hühner, Gänse, Enten und auch Küken können mit Tiertränken der hier angesprochenen Art ihren Wasserbedarf selbsttätig decken. Die Tiertränke verfügt dazu über eine längliche Wasserversorgungsleitung, die vorzugsweise mehrere Tränkeventile in regelmäßigen Abständen aufweist. Bevorzugt ist jedem Tränkeventil oder zumindest einigen Tränkeventilen eine Wasserauffangschale zugeordnet. Darin sammelt sich vom Tränkeventil abgegebenes Wasser, und zwar insbesondere Spritzwasser, das nicht direkt von den Tieren aufgenommen wird. Sobald der Wasservorrat in der Wasserauffangschale ganz oder größtenteils verbraucht ist, können die Tiere vorzugsweise durch ihre Schnäbel das jeweilige Tränkeventil zeitweise öffnen, damit wieder frisches Wasser in die Wasserauffangschale nachläuft. Es ist aber auch denkbar, dass die Tiere direkt das aus den Tränkeventilen auslaufende Wasser trinken.

Es ist aus der DE 20 2005 020 411 U1 eine Tiertränke bekannt, bei der dem zum eigentlichen Öffnen und Schließen des Tränkeventils dienenden Ventilkörper, der als Ventilstift ausgebildet ist, ein zusätzliches Betätigungsmittel zugeordnet ist. Das vorzugsweise eine längliche Stange oder ein längliches Rohr aufweisende Betätigungsmittel verlängert einen aus dem Tränkeventil herausragenden unteren Endbereich des Ventilstifts. Dadurch wird das Öffnen und Schließen des Tränkeventils vor allem von kleineren Tieren, beispielsweise Küken, erleichtert. Durch das Betätigungsmittel ist das jeweilige Tränkeventil vor allem für kleinere Tiere auch leichter zu erreichen. Es hat sich jedoch gezeigt, dass der vom Betätigungsmittel verschwenkte Ventilstift und/oder der diesem zugeordnete Ventilsitz im Gehäuse des Tränkeventils einseitig abnutzen und dadurch das Tränkeventil nicht mehr zuverlässig schließt. Das Tränkeventil wird dann unbrauchbar.

Bei der US 5 660 139 A wird von einem schwenkbaren stiftförmigen Betätigungsmittel ein als Kugel ausgebildeter Ventilkörper zum Öffnen des Tränkeventils angehoben. Ein Kopf des Betätigungsmittels stützt sich dabei im Inneren des Gehäuses des Tränkeventils ab, was bei einem häufig von der gleichen Seite erfolgenden Verschwenken des Betätigungsmittels zu einem raschen Verschleiß des Tränkeventils führt.

Bei der DE 93 15 617 U1 und auch bei der EP 0 332 852 A1 dient ein Kopf des Betätigungsmittels gleichzeitig als Ventilkörper. Auch hier kommt es durch ein überwiegend von der gleichen Seite erfolgendes Verschwenken des Betätigungsmittels zu einem Verschleiß des Tränkeventils, insbesondere am Dichtsitz zwischen dem als Ventilkörper dienenden Kopf des Betätigungsmittels und dem damit korrespondierenden Dichtsitz des Gehäuses des Tränkeventils.

Der Erfindung liegt die Aufgabe zugrunde, eine Tiertränke zu schaffen, bei der die Tränkeventile, insbesondere ihre Ventilkörper und/oder Dichtsitze, nicht mehr oder zumindest weniger einseitig abnutzen. Dadurch wird die Lebensdauer der Tränkeventile einer solchen Tiertränke verlängert.

Eine Tiertränke zur Lösung dieser Aufgabe weist die Merkmale des Anspruchs 1 auf. Demnach ist es vorgesehen, dass zum Öffnen des Tränkeventils der Ventilkörper vom beweglichen bzw. bewegbaren Betätigungsmittel anhebbar ist, indem zwischen dem Ventilkörper und dem Betätigungsmittel ein Übertragungsmittel angeordnet ist. Demzufolge ist durch ein Bewegen des Betätigungsmittels zum Öffnen des Tränkeventils der Ventilkörper im Wesentlichen nur geradlinig anhebbar.

Beim Öffnen des Tränkeventils durch Anheben des Ventilkörpers erübrigt sich das bei bekannten Tiertränken dieser Art notwendige Verkippen oder Verkanten des Ventilkörpers im Gehäuse des Tränkeventils. Statt dessen wird der Ventilkörper vom Betätigungsmittel vorzugsweise ausschließlich auf einer vertikalen, geradlinigen Bahn bewegt. Weil somit zum Öffnen und auch zum Schließen des Tränkeventils kein Verkippen des Ventilkörpers mehr erforderlich ist, nutzen Tränkeventile der erfindungsgemäßen Tiertränke nicht oder nicht mehr nennenswert einseitig ab. Der Verschleiß wird dadurch deutlich herabgesetzt, so dass Tränkeventile der erfindungsgemäßen Tiertränke über eine längere Lebensdauer verfügen.

Besonders vorteilhaft ist eine Ausbildung des Betätigungsmittels derart, dass es den Ventilkörper geradlinig anhebt, insbesondere auf einer vertikalen Achse oder Bewegungsbahn, die gemäß einer besonders vorteilhaften Ausgestaltung der Erfindung auf einer Längsmittelachse des Tränkeventils liegt.

Bei einer bevorzugten Weiterbildung der Tiertränke ist es vorgesehen, das Betätigungsmittel mit mindestens einer Führungsbahn, zum Beispiel einer Führungskulisse, zu versehen. Die Führungsbahn ist so ausgebildet, dass sie beim Bewegen, insbesondere Verschwenken, des Betätigungsmittels den diesem zugeordneten Ventilkörper oder gegebenenfalls mehrere übereinander angeordnete Ventilkörper mindestens anhebt. Das Absenken des mindestens einen Ventilkörpers erfolgt selbsttätig, wenn das Betätigungsmittel in seine vorzugsweise senkrecht ausgerichtete, unausgelenkte Ruhestellung zurückkehrt. Bei in die Ausgangsstellung abgesenktem Ventilkörper ist das Tränkeventil geschlossen. Die Führungsbahn des Betätigungsmittels weist einen solchen Verlauf auf, dass sowohl beim Verschwenken des Betätigungsmittels in die eine Richtung als auch in die entgegengesetzte Richtung der Ventilkörper angehoben wird, aber bei in die senkrechte Ausgangsstellung zurückgeschwenktem Betätigungsmittel die Führungsbahnen nicht mehr auf den Ventilkörper einwirkt, so dass dieser das Tränkeventil selbsttätig schließen kann.

Gemäß einer weiteren vorteilhaften Ausgestaltung des Tränkeventils ist es vorgesehen, das Übertragungsmittel bevorzugt zwischen dem Ventilkörper und der Führungsbahn des Betätigungsmittels anzuordnen. Insbesondere kann das Übertragungsmittel unter dem Ventilkörper vorgesehen sein, wo es bevorzugt geführt gelagert ist. Das Übertragungsmittel überträgt die Schwenkbewegung des Betätigungsmittels so auf den Ventilkörper, dass dieser beim Verschwenken des Betätigungsmittels nicht auch seitlich ausgelenkt und/oder seitwärts gerichteten Kräften ausgesetzt wird. Es wird so vom Übertragungsmittel der Schwenkweg des Betätigungsmittels umgesetzt in eine ausschließlich geradlinige Aufwärtsbewegung des Ventilkörpers. Beim seitlichen Verschwenken des Betätigungsmittels hervorgerufene seitliche Kräfte werden vom Übertragungsmittel aufgenommen und kompensiert, so dass vom Übertragungsmittel ausschließlich eine vertikal nach oben gerichtete Kraft auf den Ventilkörper ausgeübt wird, wobei bevorzugt diese Kraft mittig auf dem Ventilkörper angreift, nämlich auf der Längsmittelachse des Ventilkörpers liegt.

Bevorzugt korrespondiert das Übertragungsmittel mit der Führungsbahn des Betätigungsmittels. Dazu kann das Übertragungsmittel auf der Führungsbahn des Betätigungsmittels aufliegen bzw. sich abstützen. Es kann so das Übertragungsmittel der Kontur der Führungsbahn des Betätigungsmittels folgen. Die vorzugsweise muldenartige Kontur des Führungsmittels drückt bei in jeder Richtung erfolgenden seitlichen Auslenkung des Betätigungsmittels das Übertragungsmittel senkrecht hoch, so dass dieses gezielt senkrecht unter den Ventilkörper drückt, und zwar an einer auf der Längsmittelache des Ventilkörpers liegenden Stelle. Beim Auslenken des Betätigungsmittels hebt somit die gewölbte Führungsbahn desselben das Übertragungsmittel an, das wiederum den mindestens einen Ventilkörper betätigt, und zwar gezielt nur in der Weise, dass er lediglich senkrecht hochgedrückt wird. Dadurch unterbleibt ein Verkippen oder Verkanten des Ventilkörpers, was einseitige Abnutzungen des Kopfs des Ventilkörpers oder des Ventilsitzes oder sonstige Verschleißerscheinungen unterbindet oder zumindest soweit reduziert, dass die Lebensdauer des Tränkeventils deutlich zunimmt.

Als Übertragungsmittel kommt bevorzugt ein Wälzkörper in Betracht. Der Wälzkörper kann grundsätzlich jede beliebige geometrische Gestalt aufweisen, solange er um mindestens eine Rotationsachse drehbar ist. Demzufolge kann der Wälzkörper zylindrisch oder tonnenartig ausgebildet sein. Bevorzugt handelt es sich beim Wälzkörper aber um eine Kugel. Diese kann auf beliebigen Achsen rotieren, wodurch sie eine besonders leichte Verschwenkbarkeit des Betätigungsstifts und ein gezieltes Anheben desselben auf einer zumindest im Wesentlichen geradlinigen Bahn gewährleistet. Dabei ist es bevorzugt vorgesehen, dass eine Rotationsachse des Wälzkörpers bzw. der Kugel eine Längsmittelachse des Ventilkörpers senkrecht schneidet und/oder die Rotationsachse horizontal verläuft. Dadurch wird ein im Wesentlichen verkippungsfreies Anheben des Ventilkörpers beim seitlichen Auslenken des Betätigungsmittels gewährleistet, wodurch bei einer bevorzugten Ausbildung des Übertragungsmittels als Kugel ein seitliches Auslenken oder Verkippen des Betätigungsmittels in beliebigen Richtung erfolgen kann.

Eine andere vorteilhafte Ausgestaltung der Tiertränke sieht es vor, das Betätigungsmittel um eine Schwenkachse zu verschwenken. Das Betätigungsmittel ist dadurch nur in einer Ebene, vorzugsweise einer senkrechten Ebene, bewegbar, und zwar in entgegengesetzten Richtungen. Die Schwenkachse verläuft bevorzugt quer durch die Längsmittelachse des Ventilkörpers bzw. des diesen aufweisenden Tränkeventils. Bei üblicherweise senkrechter Längsmittelachse des Ventilkörpers verläuft so die Schwenkachse des Betätigungsmittels horizontal. Dadurch ist das Betätigungsmittel in entgegengesetzten Richtungen in einer vertikalen Ebene verschwenkbar. Durch diese besondere Anordnung des Betätigungsmittels ist ein Öffnen und Schließen des Tränkeventils durch eine ausschließliche oder im Wesentlichen ausschließlich senkrecht gerichtete Auf- und Abwärtsbewegung des Ventilkörpers gewährleistet.

Nach einer vorteilhaften Weiterbildung der Erfindung ist die Schwenkachse des Betätigungsmittels über dem Ventilkörper angeordnet, und zwar insbesondere ortsunveränderlich relativ zum Tränkeventil. Bevorzugt ist die Schwenkachse auf Höhe der Wasserversorgungsleitung angeordnet. Durch diese erhöhte Anordnung der Schwenkachse kann schon durch eine kleine Verschwenkung des Betätigungsmittels ein ausreichender Hub des Ventilkörpers zum Öffnen des Tränkeventils erzeugt werden. Außerdem entsteht so ein relativ langer Hebelarm, der ein leichtes Verschwenken des Betätigungsmittels an seinem freien unteren Betätigungsende, an dem die Tiere mit ihren Schnäbeln angreifen, erzeugt wird. Die in Bezug auf das Tränkeventil ortsfeste Schwenkachse gewährleistet eine gezielt geführte Verschwenkung des Betätigungsmittels, vorzugsweise eine im Wesentlichen spielfreie Verschwenkung des Betätigungsmittels im Bereich einer senkrechten Ebene durch die Längsmittelachse des Tränkeventils.

Weiter ist es bevorzugt vorgesehen, die horizontale Schwenkachse des Betätigungsmittels beabstandet über dem Übertragungsmittel, insbesondere über der Rotationsachse des Wälzkörpers bzw. der Kugel, anzuordnen. Vorteilhafterweise verläuft dabei die Schwenkachse des Betätigungsmittels parallel zu Rotationsachse des Wälzkörpers oder der Kugel. Dabei liegt bevorzugt die Kreuzungsstelle der Schwenkachse und der Rotationsachse auf der vertikalen Längsmittelachse des Tränkeventils und mindestens des Ventilkörpers, dem das Betätigungsmittel zugeordnet ist. Durch diese besondere Anordnung der Schwenkachse des Betätigungsmittels und der Rotationsachse des Übertragungsmittels werden besonders vorteilhafte Voraussetzungen für ein zuverlässiges und gezieltes Öffnen und Schließen des Tränkeventils durch eine überwiegend oder vorzugsweise ausschließlich senkrechte Auf- und Abbewegung des Ventilkörpers auf der Längsmittelachse des Tränkeventils herbeigeführt.

Eine besonders vorteilhafte Ausgestaltung der Tiertränke sieht es vor, das Betätigungsmittel mit einer länglichen Stange oder einem länglichen Rohr zu versehen. Bevorzugt weist das Betätigungsmittel auch eine Gabel auf, die am oberen Ende der Stange bzw. des Rohrs angeordnet ist. Bevorzugt ist die Gabel einstückig an das obere Ende der Stange oder des Rohrs angeformt. Die längliche Stange bzw. das längliche Rohr bilden einen Hebel zur leichten Verschwenkung des Betätigungsmittels, wobei die Gabel am oberen Ende der Stange oder des Rohrs eine zuverlässige und im wesentlichen spielfreie Lagerung des Betätigungsmittels auf der Schwenkachse zulassen. Bevorzugt ist es vorgesehen, dass der Gabel, und zwar einem die Stange oder das Rohr tragenden Steg derselben, die vorzugsweise muldenartige Führungsbahn für das Übertragungsmittel zugeordnet ist. Dadurch nimmt die Führungsbahn unmittelbar an der Schwenkbewegung des Rohrs oder der Stange des Betätigungsmittels teil und überträgt die Schwenkbewegung über den zwischen der Führungsbahn und dem Ventilkörper angeordneten Wälzkörper an den wenigstens einen Ventilkörper, wobei gleichzeitig die Schwenkbewegung des Betätigungsmittels in eine reine Hubbewegung mindestens des Ventilkörpers umgewandelt wird.

Eine andere bevorzugte Weiterbildung der Erfindung sieht es vor, das Betätigungsmittel mit parallelen Schenkeln einer Gabel auf oder an der Schwenkachse zu lagern. Die Gabel gewährleistet eine besonders zuverlässige und dauerhafte Lagerung des Betätigungsmittels auf der Schwenkachse. Bevorzugt ist das Betätigungsmittel mit den parallelen, senkrechten Schenkeln um die Schwenkachse verschwenkbar an einer mit der Wasserversorgungsleitung zu verbindenden Halterung gelagert. Die Halterung kann lösbar an der Wasserversorgungsleitung befestigt sein, so dass eine leichte Montage und Demontage zum gegebenenfalls erforderlichen Auswechseln des Betätigungsmittels gewährleistet ist. Die Halterung stellt außerdem eine zuverlässige Befestigung des Betätigungsmittels in fester Relativanordnung zum Tränkeventil her, ohne dass das Tränkeventil in einer zur Lagerung des Betätigungsmittels geeigneten Weise modifiziert zu sein braucht.

Gemäß einer denkbaren Weiterbildung der Tiertränke kann am unteren Endbereich des Tränkeventils eine Führung vorgesehen sein. Bevorzugt ist die Führung als eine Führungshülse ausgebildet. Die Führung bzw. Führungshülse dient dazu, einen nach unten aus dem Tränkeventil herausragenden unteren Endbereich des Ventilkörpers so zu halten, dass er auch unter dem Gehäuse des Tränkeventils im Wesentlichen vekippungsfrei gehalten ist, sich also im Wesentlichen nur auf einer senkrechten Längsmittelachse auf- und abbewegen kann. Alternativ oder zusätzlich kann die Führung bzw. Führungshülse auch dazu dienen, das Übertragungsmittel, beispielsweise den Wälzkörper oder die Kugel, so zu halten, dass es sich nur in der Führung oder Führungshülse senkrecht auf- und abbewegen kann, und zwar insbesondere auf einer unteren Verlängerung der Längsmittelachse des Ventilkörpers. Hierdurch wird sichergestellt, dass sich der Ventilkörper und/oder das Übertragungsmittel (Wälzkörper oder Kugel) nur frei auf- und abbewegen können und seitliche Verlagerungen des Übertragungsmittels und/oder des Ventilkörpers - abgesehen vom notwendigen kleinen Spiel - unterbleiben.

Schließlich sieht eine vorteilhafte Ausgestaltung der Erfindung es vor, dass das freie, untere Ende des Betätigungsmittels, vorzugsweise der länglichen Stange oder des länglichen Rohrs desselben, sich bis in einen Wassersammelraum der Wasserauffangschale erstreckt. Dadurch ist das Betätigungsmittel auch von jungen Tieren leicht zugänglich.

Bevorzugt wird der Verschwenkweg des Betätigungsmittels, insbesondere der Stange oder des Rohrs, durch eine Wandung der Wasserauffangschale begrenzt. Durch eine entsprechende Bemessung der Länge und des Durchmessers der Stange oder des Rohrs und der Wasserauffangschale ist ein Schwenkweg vorgebbar, der den Anforderungen gerecht wird und ein ausreichendes Öffnen des Tränkeventils vom Betätigungsmittel zulässt; aber ein übermäßiges Verschwenken des Betätigungsmittels und dadurch hervorgerufene Beschädigungen desselben verhindert werden, indem das untere Ende des Betätigungsmittels an der Innenseite der Wasserauffangschale zur Anlage kommt, bevor das Rohr oder die Stange des Betätigungsmittels über ein zulässiges Maß hinaus verschwenkt wird. Dadurch können auch größere und ältere Tiere die Tränkeeinrichtung nicht durch übermäßiges Verschwenken des Betätigungsmittels beeinträchtigen oder gar beschädigen.

Zwei bevorzugte Ausführungsbeispiele der Erfindung werden nachfolgend anhand der Zeichnung näher erläutert. In dieser zeigen:
- Fig. 1: eine (in Bezug auf die Längserstreckungsrichtung einer Wasserversorgungsleitung) Seitenansicht eines ersten Ausführungsbeispiels einer Tiertränke in einer Schließstellung,
- Fig. 2: einen Querschnitt durch die Tiertränke der Fig. 1 in ihrer Schließstellung,
- Fig. 3: eine Ansicht analog zur Fig. 1 in einer Öffnungsstellung des Tränkeventils,
- Fig. 4: eine Ansicht analog zur Fig. 2 in der Öffnungsstellung des Tränkeventils,
- Fig. 5: ein zweites Ausführungsbeispiel einer Tiertränke in einer Ansicht analog zur Fig. 1,
- Fig. 6: einen Querschnitt durch die Tiertränke der Fig. 5 in ihrer Schließstellung,
- Fig. 7: die Tiertränke in einer Öffnungsstellung des Tränkeventils gemäß einer Darstellung analog zur Fig. 5, und
- Fig. 8: eine Ansicht analog zur Fig. 6 in der Öffnungsstellung des Tränkeventils.

Die hier gezeigte Tiertränke ist als sogenannte Strangtränke für die Bodenhaltung von Geflügel ausgebildet. Die Tiertränke ermöglicht es allen Arten von Geflügel, vor allem auch Jungtieren (Küken), den Wasserbedarf selbsttätig zu decken. Besonders wird die hier gezeigte Tiertränke eingesetzt zur Wasserversorgung von Puten und Putenküken.

Die in den Figuren gezeigte Tiertränke verfügt über eine langgestreckte, rohrartige Wasserversorgungsleitung 10 mit mehreren voneinander beabstandeten Tränkestellen 11. Alle Tränkestellen 11 sind im gezeigten Ausführungsbeispiel gleich ausgebildet. Die Wasserversorgungsleitung 10 ist im Stall an nicht gezeigten Trägerseilen horizontalgerichtet mit entsprechendem (geringen) Abstand zum Boden angeordnet. Der Wasserversorgungsleitung 10 sind bei der hier gezeigten Tiertränke in regelmäßigen Abständen Tränkeventile 12 zugeordnet. Auch die Tränkeventile 12 sind untereinander gleich ausgebildet.

Es handelt sich bei den hier gezeigten Tränkeventilen 12 um solche, bei denen das Gehäuse 13 im oberen Endbereich ein Außengewinde aufweist, womit die Tränkeventile 12 in eine entsprechende Gewindebohrung der Wasserversorgungsleitung 10 einschraubbar sind.

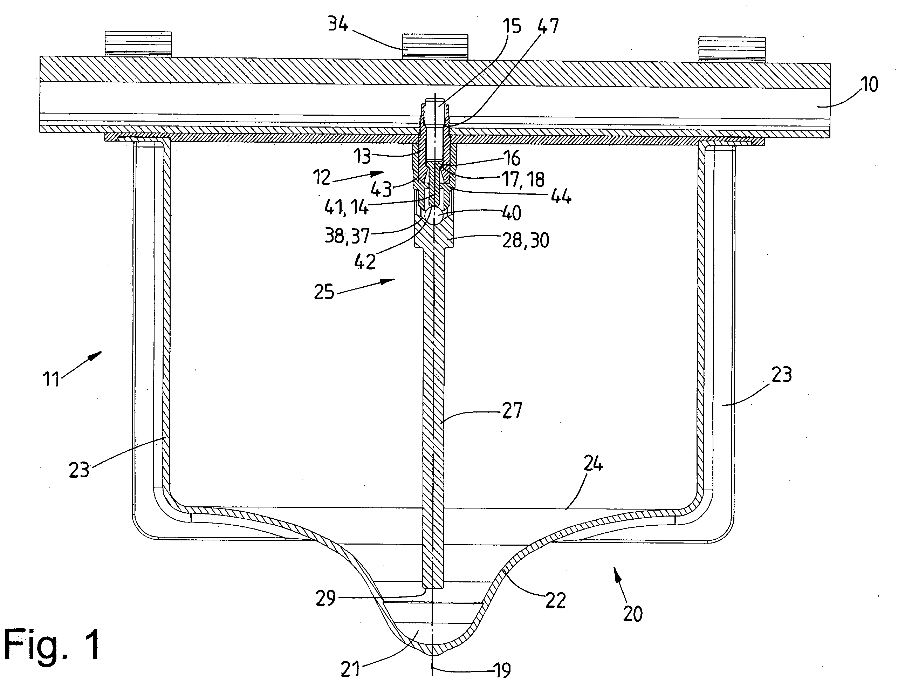

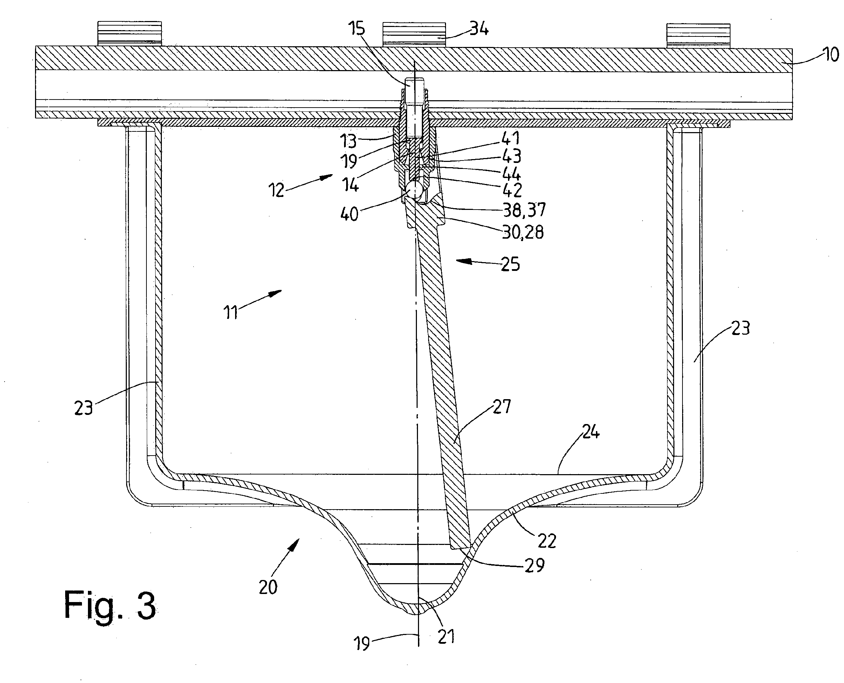

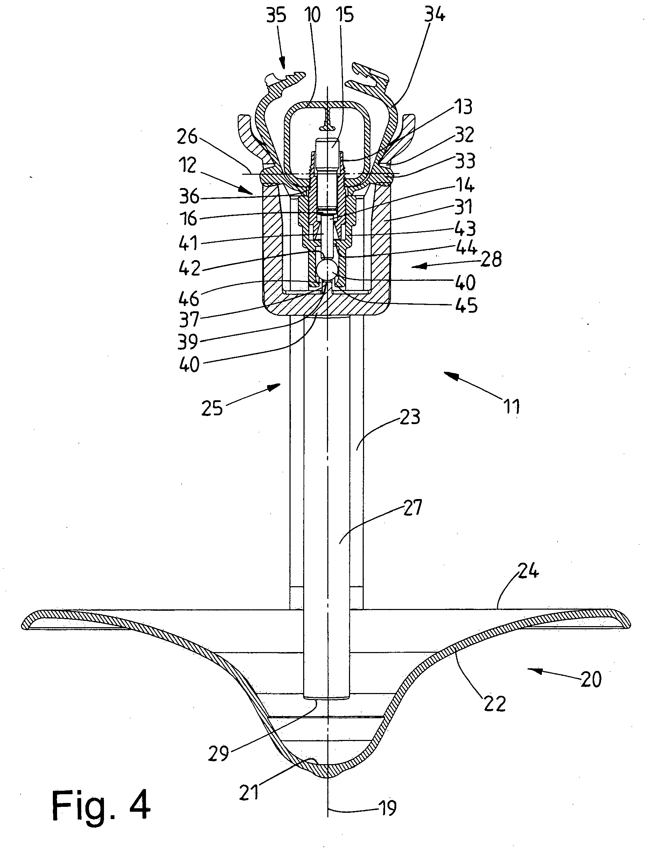

Die Tränkeventile 12 der Fig. 1 bis 4 verfügen über zwei im Gehäuse 13 übereinander gelagerte Ventilkörper, und zwar einen Ventilstift 14 und einen darüber angeordneten Oberstift 15, der im gezeigten Ausführungsbeispiel etwas nach oben aus dem Gehäuse 13 herausragt. Ein unterer Endbereich des Ventilstifts 14 ragt zur Bildung eines Betätigungsendes unten aus dem Gehäuse 13 heraus.

Der Ventilstift 14 weist an seinem im Gehäuse 13 liegenden oberen Ende einen Kopf 16 auf, der im gezeigten Ausführungsbeispiel zylindrisch ausgebildet ist, aber auch anders gestaltet sein kann. Bei geschlossenen Tränkeventilen 12 liegt der Ventilstift 14 mit der unteren Kreisringfläche seines Kopfs 16 auf einer bevorzugt auch kreisringförmigen Dichtfläche 17 im Gehäuse 13 auf. Die Dichtfläche 17 ist im Bereich einer Abstufung im Gehäuse 13 gebildet. Die Ringfläche an der Unterseite des Kopfs 16 des Ventilstifts 14 und die damit korrespondierende Dichtfläche 17 des Gehäuses 13 bilden zusammen einen Dichtsitz 18 zwischen dem Gehäuse 13 und dem Ventilstift 14, der bei auf der Dichtfläche 17 anliegendem Kopf 16 geschlossen ist. Wird der Ventilstift 14 allein oder gegebenenfalls mit dem Oberstift 15 auf einer Längsmittelachse 19 des Tränkeventils 12, die zugleich die Längsmittelachse des Ventilstifts 14 und des Oberstifts 15 ist, aufwärtsbewegt, erfolgt ein Öffnen des Tränkeventils 12, indem der Kopf 16 des Ventilstifts 14 von der Dichtfläche 17 abgehoben ist.

Der Ventilstift 14, der Oberstift 15 und das Gehäuse 13 des in den Figuren gezeigten Tränkeventils 12 sind aus Edelstahl gebildet. Zumindest das Gehäuse 13 kann aber auch ganz oder teilweise aus einem anderen Material bestehen, beispielsweise Kunststoff.

Dem in den Figuren gezeigten Tränkeventil 12 ist eine Wasserauffangschale 20 zugeordnet. Bevorzugt sind auch allen übrigen Tränkeventilen 12 der Tiertränke gleiche Wasserauffangschalen 20 zugeordnet. Die in den Figuren gezeigte Wasserauffangschale 20 ist mittig mit Abstand unter dem jeweiligen Tränkeventil 12 angeordnet, und zwar so, dass die tiefste Stelle 21 der Wasserauffangschale 20 auf der (verlängerten) Längsmittelachse 19 des Tränkeventils 12 liegt. Die Wasserauffangschale 20 ist lösbar, aber ortsfest und unbeweglich, an der Wasserversorgungsleitung 10 montiert, und zwar so, dass sich eine Wasseraufnahmemulde 22 der Wasserauffangschale 20 mit Abstand unter dem Tränkeventil 12 befindet.

Die Wasserauffangschale 20 verfügt über die Wasseraufnahmemulde 22 und zwei parallele, gleiche Tragarme 23 an gegenüberliegenden Rändern der Wasseraufnahmemulde 22. Die Wasseraufnahmemulde 22 verfügt im gezeigten Ausführungsbeispiel über eine längliche, schiffchenartige Gestalt. Auch ändert sich die Querschnittsgestaltung der Wasseraufnahmemulde 22 von der tiefsten Stelle 21 im Bodenbereich zu einem oberen Rand 24 hin, und zwar vorzugsweise kontinuierlich. Der Rand 24 ist bei der gezeigten Wasserauffangschale 20 elliptisch bzw. oval ausgebildet. Der Rand 24 kann alternativ aber auch kreisrund sein oder andere geometrische Formen, auch eckige, aufweisen.

Die Wasseraufnahmemulde 22 ist so unter der länglichen Wasserversorgungsleitung orientiert, dass die längere Achse des Randes 24 der Wasseraufnahmemulde 22 in Längsrichtung der Wasserversorgungsleitung 10 verläuft, und zwar mit parallelem Abstand unter der Wasserversorgungsleitung 10 angeordnet ist, so dass eine Ebene, in der der Rand 24 der Wasseraufnahmemulde 22 liegt, etwa horizontal verläuft.

Die gesamte Wasserauffangschale 20 ist bevorzugt einstückig aus Kunststoff, und zwar vorzugsweise einem thermoplastischen Kunststoff, gebildet.

Die beiden Tragarme 23 der Wasserauffangschale 20 sind auf gegenüberliegenden Seiten desjenigen Tränkeventils 12 angeordnet, denen die Wasserauffangschale 20 zugeordnet ist. Bevorzugt befindet sich das Tränkeventil 12 mittig zwischen den beiden parallelen Tragarmen 23. Unten an die Tragarme 23 schließt einstückig die Wasseraufnahmemulde 22 der Wasserauffangschale 20 an. Demzufolge greifen die Tragarme 23 an gegenüberliegenden Enden der langen Achse des oberen Rands 24 an.

Jedem Tränkeventil 12 ist ein Betätigungsmittel 25 zugeordnet. Das Betätigungsmittel 25 ist um eine horizontale Schwenkachse 26 gezielt verschwenkbar dem Tränkeventil 12 zugeordnet. Die horizontale Schwenkachse 26 verläuft quer zur Längsrichtung der Wasserversorgungsleitung 10 und gleichzeitig durch die Längsmittelachse 19 des Tränkeventils 12. Die Schwenkachse 26 befindet sich oberhalb des Ventilstifts 14 bevorzugt in der Nähe einer Unterseite der Wasserversorgungsleitung 10.

Das Betätigungsmittel 25 weist eine untere, längliche Stange 27 und eine am oberen Ende derselben einstückig angeformte Gabel 28 auf. Ein freies unteres Ende 29 der Stange 27 ragt in die Wasserauffangschale 20 hinein, endet dort aber mit Abstand über der tiefsten Stelle 21. Anstatt der Stange 27 kann das Betätigungsmittel 25 auch ein Rohr oder dergleichen aufweisen.

Die Gabel 28 verfügt über einen bei unausgelenktem Betätigungsmittel 25 horizontalen Steg 30 und zwei parallele, vertikale Schenkel 31 an gegenüberliegenden Rändern des Stegs 30. Mit dem Steg 30 ist die Gabel 28 einstückig an der Stange 27 angeformt. Die Schenkel 31 erstrecken sich in parallelen, aufrechten Ebenen auf gegenüberliegenden Seiten einer Längsachse der Wasserversorgungsleitung 10. Obere Endbereiche der Schenkel 31 sind mit Durchgangsbohrungen 32 versehen, die auf gegenüberliegenden Endbereichen der Schwenkachse 26 liegen. Die Durchgangsbohrungen 32 der Gabel 28 korrespondieren mit nach außen vorstehenden Lagerzapfen 33 einer Halterung 34 für das Betätigungsmittel 25 an der Wasserversorgungsleitung 10. Die Lagerzapfen 33 sind so bemessen, dass sie sich mit Spiel durch die Durchgangsbohrungen 32 in den Schenkeln 31 der Gabel 28 erstrecken, so dass das Betätigungsmittel 25 um die Schwenkachse 26 in entgegengesetzten Richtungen frei hin- und herschwenkbar ist, und zwar in einer vertikalen Ebene durch die Längsachse der Wasserversorgungsleitung 10. Das Betätigungsmittel 25 ist dadurch in Längsrichtung der Wasserversorgungsleitung 10 hin- und herschwenkbar aus einer vertikalen, unausgelenkten Ausgangsstellung, in der die Längsachse der Stange 27 die Längsmittelachse 19 des Tränkeventils 12 nach unten hin verlängert.

Die Halterung 34 für das Betätigungsmittel 25 ist lösbar mit der Wasserversorgungsleitung 10 verbunden. Dazu verfügt die Halterung 34 über einen über der Wasserversorgungsleitung 10 liegenden Rastverschluss 35. Bei geschlossenem Rastverschluss 35 umgibt die Halterung 34 die Wasserversorgungsleitung 10 vollständig. Unterhalb der Wasserversorgungsleitung 10 verfügt die Halterung 34 über eine Durchgangsbohrung 36 zum freien Hindurchtritt des von unten in die Wasserversorgungsleitung 10 einschraubbaren Tränkeventils 12.

Mittig zwischen den Schenkeln 31 ist auf dem Steg 30 eine zum Tränkeventil 12 weisende Führungsbahn 37 vorgesehen. Die Führungsbahn 37 ist vorzugsweise einstückig nach oben vorstehend an der Oberseite des Stegs 30 angeformt. Die Führungsbahn 37 ist kulissenartig aus einem schmalen Materialstreifen gebildet, der sich in Längsrichtung der Wasserversorgungsleitung 10 erstreckt. Die Oberseite des Materialstreifens zur Bildung der Führungsbahn 37 ist mit einer mittigen Mulde 38 versehen. Die tiefste Stelle der Mulde 38 liegt bei unausgelenktem Betätigungsmittel 25 unter dem Tränkeventil 12, und zwar mittig bezogen auf die Längsmittelachse 19 des Tränkeventils 12. In Querrichtung der Wasserversorgungsleitung 10 ist die Mulde 38 der Führungsbahn 37 mit einer horizontalen Führungsfläche 39 versehen.

Der Führungsbahn 37 ist ein Übertragungsmittel zugeordnet, das im gezeigten Ausführungsbeispiel als ein Wälzkörper, nämlich eine Kugel 40, ausgebildet ist. Die Kugel 40 befindet sich zwischen dem Ventilstift 14 und der Führungsbahn 37, wobei der Ventilstift 14 sich oberhalb oder auf der Kugel 40 befindet und die Führungsbahn 37 unter der Kugel 40, die sich vorzugsweise auf der Führungsbahn 37 abstützt, und zwar sowohl in der senkrechten Ausgangsstellung des Betätigungsmittels 25 als auch in der verkippten Stellung desselben. Die Kugel 40 kann aus Edelstahl, Kunststoff oder auch anderen Materialien gebildet sein. Der Durchmesser der Kugel 40 ist etwas größer als der Durchmesser des unten aus dem Tränkeventil 12 herausragenden unteren Endes einer stangenartigen Ventilnadel 41 des Ventilstifts 14. Vorzugsweise ist der Durchmesser der Kugel 40 etwa 1,5-fach bis 2-fach so groß wie der Durchmesser der Ventilnadel 41 des Ventilstifts 14. Die Mulde 38 der Führungsbahn 37 auf dem Steg 30 der Gabel 28 korrespondiert zumindest in einem mittleren Abschnitt im Bereich der tiefsten Stelle mit dem Durchmesser der Kugel 40, kann aber auch etwas größer sein. Die Mitte der Kugel 40 liegt auf der Längsmittelachse 19 des Tränkeventils 12, wodurch die Kugel 40 mittig unter der vorzugsweise flachen, horizontalen Stirnfläche 42 der Ventilnadel 41 des Ventilstifts 14 liegt.

Dem Übertragungsmittel, also im gezeigten Ausführungsbeispiel der Kugel 40 und dem Ventilstift 14, ist eine Führung 43 zugeordnet. Die Führung 43 ist hülsenartig ausgebildet. Die Führung 43 hält nicht nur die Kugel 40 mittig unter dem Ventilstift 12; sie hält auch das unten aus dem Tränkeventil 42 herausragende Ende der Ventilnadel 41 des Ventilstifts 14 auf der Längsmittelachse 19 des Tränkeventils 12 und trägt dazu bei, dass sich der Ventilstift 14 so auch dazu nicht oder zumindest nicht nennenswert verkippen lässt. Die Führung 43 aus beispielsweise Kunststoff ist von unten auf einen aus der Wasserversorgungsleitung 10 herausragenden Teilbereich des Tränkeventils 12, vorzugsweise dem Gehäuse 13 desselben, aufgesteckt oder aufgeschraubt. Auf diese Weise wird die Führung 43 vom Tränkeventil kraft- oder formschlüssig gehalten. Eine Längsmittelachse der zylindrischen hülsenartigen Führung 43 liegt auch auf der Längsmittelachse 19 des Tränkeventils 12.

Die Führung 43 verfügt direkt unter dem Gehäuse 13 über eine umlaufende Einschnürung 44, die so bemessen ist, dass sie eine zum Außendurchmesser der Ventilnadel 41 korrespondierende Durchgangsbohrung aufweist, in der die Ventilnadel 41 des Ventilstifts 14 lediglich auf- und abbewegbar ist, aber ein seitliches Verkippen des Ventilstifts 14 auch von der Einschnürung 44 zumindest nahezu verhindert wird. In einem unteren Endbereich innerhalb der hülsenartigen Führung 43 ist die Kugel 40 des Übertragungsmittels gelagert. Gegen Herausfallen aus der Führung 43 ist die Kugel 40 gesichert durch eine geringfügige Einschnürung 45 an der unteren Stirnseite der hülsenartigen Führung 43. Die Einschnürung 45 ist aber nicht umlaufend. Sie erstreckt sich nur in zwei Bereichen an gegenüberliegenden Seiten der in Längsrichtung der Wasserversorgungsleitung 10 verlaufenden Führungsflächen 39. In Längsrichtung der Führungsfläche 39 befindet sich im unteren Bereich der Führung 43 eine durchgehende Nut 46, die etwas breiter ist als die Führungsfläche 39, so dass die muldenartige Führungsfläche 39 sich insbesondere mit ihren höheren gegenüberliegenden Endbereichen durch die Nut 46 erstrecken kann, und zwar ohne Berührung mit der Führung 43.

Die Länge und der Durchmesser der Stange 27 des Betätigungsmittels 25 sind so an die Kontur der Wasseraufnahmemulde 22 angepasst, dass von der Innenseite der Wasseraufnahmemulde 22 der Schwenkwinkel des Betätigungsmittels 25 in einer vertikalen Ebene längs unter der Wasserversorgungsleitung 10 in entgegengesetzten Richtungen begrenzt wird. Dadurch kann das Betätigungsmittel 25 in beiden Richtungen der vertikalen Ebene unter der Wasserversorgungsleitung 10 nur so weit verschwenkt werden, dass die Kugel 40 des Übertragungsmittels stets im Bereich der Führungsfläche 39 der Mulde 38 verbleibt.

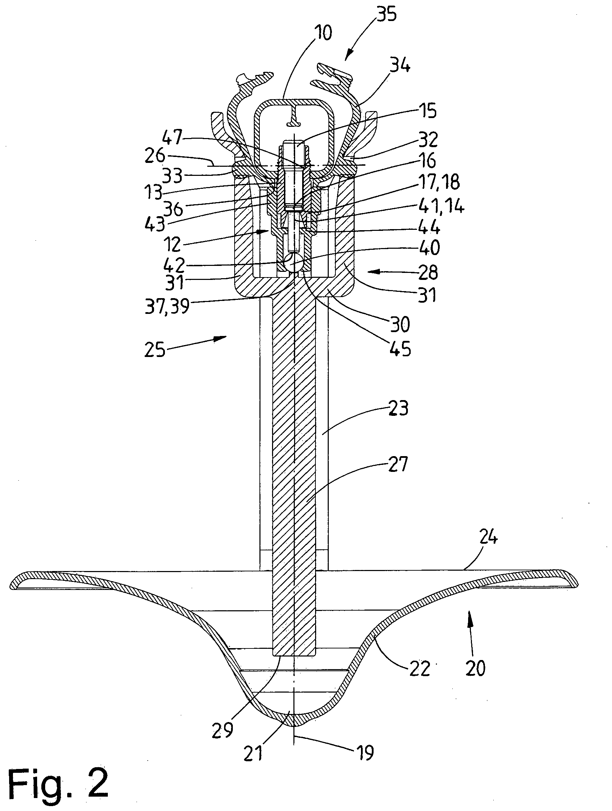

Die Fig. 1 und 2 zeigen die Schließstellung des Tränkeventils 12. In dieser befindet sich das Betätigungsmittel 25 in der unausgelenkten Ausgangsstellung. In dieser Ausgangsstellung verläuft die Längsmittelachse der Stange 27 des Betätigungsmittels 25 in Verlängerung der Längsmittelachse 19 des Tränkeventils 12. Das untere Ende 29 der Stange 27 befindet sich dabei mittig oberhalb der tiefsten Stelle 21 der Wasseraufnahmemulde 22 der Wasserauffangschale 20.

In der unausgelenkten Ausgangsstellung des Betätigungsmittels 25 ist das Tränkeventil 12 geschlossen. Der Kopf 16 des Ventilstifts 14 liegt dabei auf der Dichtfläche 17 des Gehäuses 13 an, so dass eine Abdichtung des Ventilstifts 14 gegenüber dem Gehäuses 13 des Tränkeventils 12 zustande kommt. Hierbei liegt die untere, horizontale Stirnfläche 42 der Ventilnadel 41 des Ventilstifts 14 nicht auf der Kugel 40 an, befindet sich vielmehr mit einem geringen Abstand oberhalb der Kugel 40, so dass ein geringer Spalt zwischen der Kugel 40 und der Stirnfläche 42 des Ventilstifts 14 verbleibt, der ein zuverlässiges Schließen des Tränkeventils 12 durch den Ventilstift 14 sicherstellt. Die Kugel 40 befindet sich dabei mittig in der Mulde 38 der Führungsbahn 37 auf dem Steg 30 der Gabel 28 des Betätigungsmittels 25, also an der tiefsten Stelle der Führungsbahn 37.

Beim Verschwenken des Betätigungsmittels 25 in jede Richtung in der vertikalen Ebene längs unter der Wasserversorgungsleitung 10 wird von den auf gegenüberliegenden Seiten der Mulde 38 ansteigenden Führungsflächen 39 der Führungsbahn 37 die Kugel 40 senkrecht auf der Längsmittelachse 19 des Tränkeventils 12 angehoben. Dabei drückt die von der Führungsbahn 37 hochbewegte Kugel 40 auf eine mittig auf der Längsmittelachse 19 des Ventilstifts 14 liegende Stelle unter die ebene Stirnfläche 42 der Ventilnadel 41 des Ventilstifts 14, wodurch eine auf der Längsmittelachse 19 liegende senkrecht nach oben gerichtete Kraft auf den Ventilstift 14 einwirkt und diesen zusammen mit dem Oberstift 15 im Gehäuse hochdrückt. Von der angehobenen Kugel 40 wird auch der Ventilstift 14 angehoben, nämlich auf der Längsmittelachse 19 geradlinig nach oben bewegt. Dabei wird das Tränkeventil 12 geöffnet, indem der Dichtsitz 18 zwischen dem Kopf 16 des Ventilstifts 14 und dem Gehäuse 13 geöffnet wird. Vorzugsweise wird beim Anheben des Ventilstifts 14 durch die Kugel 40 auch der Oberstift 15 angehoben, also hochbewegt. Dadurch wird ein im gezeigten Ausführungsbeispiel vorhandener Dichtsitz 47 zwischen dem Oberstift 15 und dem Gehäuse 13 auch geöffnet. Die Erfindung eignet sich auch für Tränkeventile, bei denen kein Dichtsitz 47 zwischen dem Oberstift 15 und dem Gehäuse 13 vorhanden ist. Auch eignet sich die Erfindung für Tränkeventile 12, bei denen nur ein Dichtsitz 47 zwischen dem Oberstift 15 und dem Gehäuse 13 vorgesehen ist und kein Dichtsitz 18 zwischen dem Kopf 16 des Ventilstifts 14 und dem Gehäuse 13.

Sobald das sich an der Tiertränke befindende Tier das Betätigungsmittel 25 loslässt, kehrt das Betätigungsmittel 25 selbsttätig, und zwar schwerkraftbedingt, in die unausgelenkte Ausgangsstellung, in der die Stange 27 auf der Längsmittelachse 19 des Tränkeventils 12 liegt, zurück. Dabei gelangt die Kugel 40 wieder in die tiefste Stelle der Mulde 38 der Führungsbahn 37, so dass der Ventilstift 14 und auch der Oberstift 15 selbsttätig schwerkraftbedingt sich im Gehäuse 13 des Tränkeventils 12 wieder linear abwärts bewegen und dadurch das Tränkeventil 12 im Bereich des Dichtsitzes 18 und/oder des Dichtsitzes 47 wieder geschlossen wird, insbesondere der Kopf 16 des Ventilstifts 14 wieder auf der Dichtfläche 17 des Gehäuses 13 aufliegt.

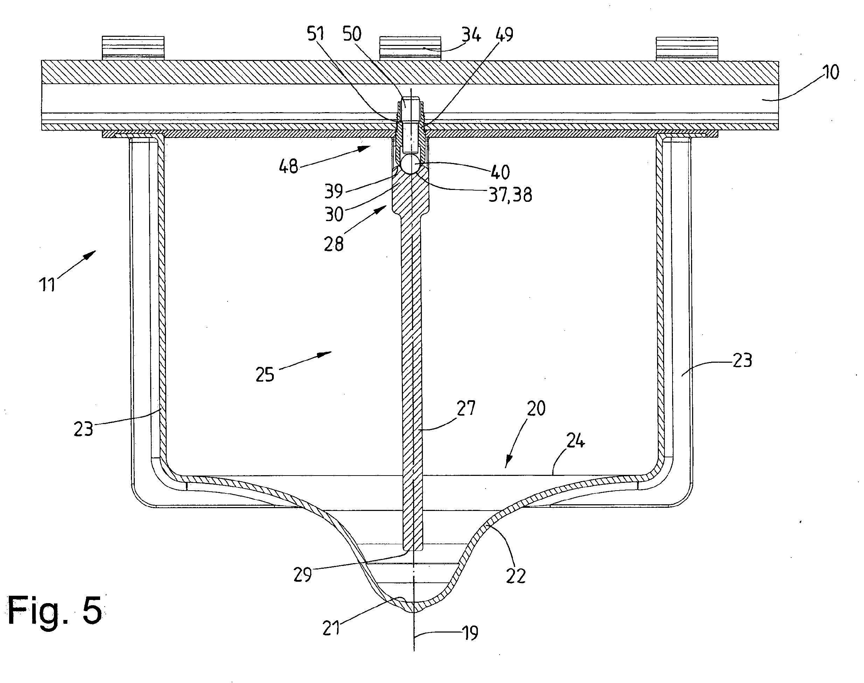

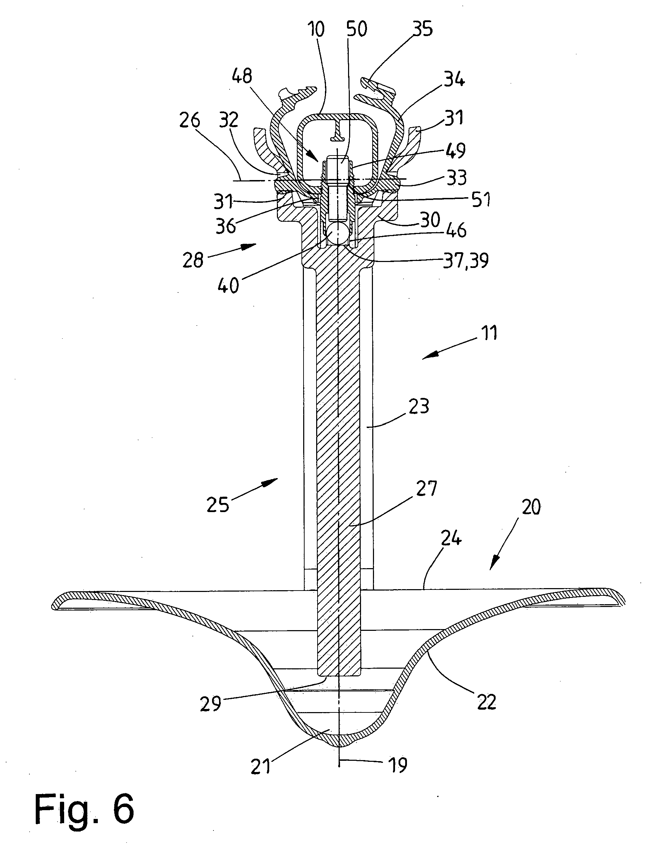

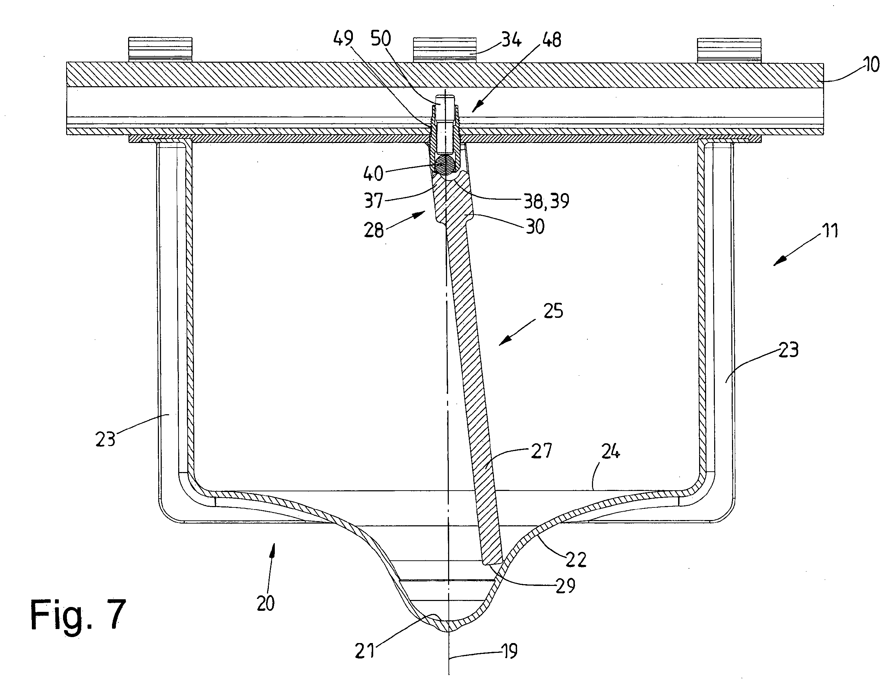

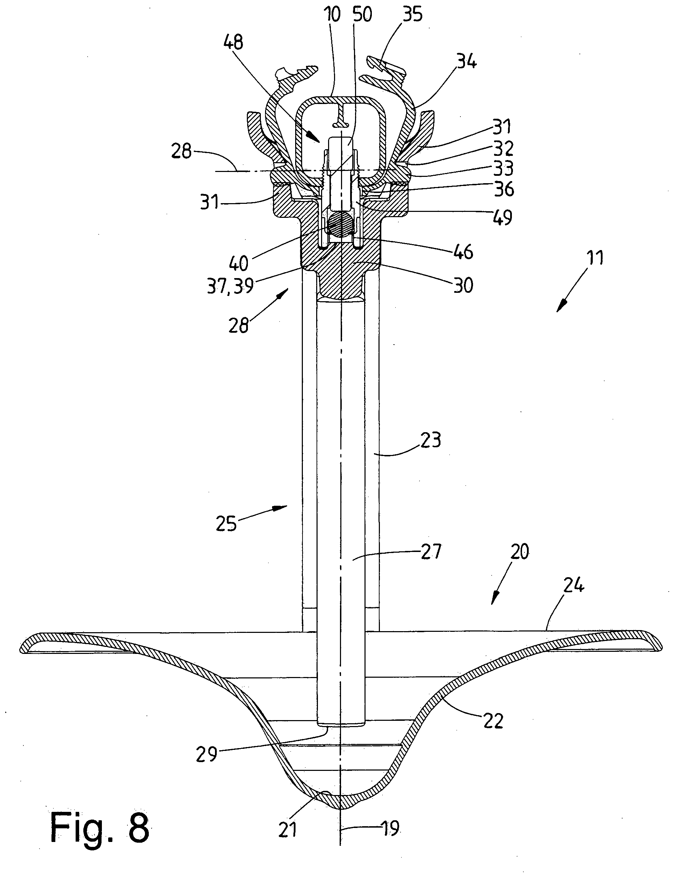

Die Fig. 5 bis 8 zeigen ein zweites Ausführungsbeispiel der erfindungsgemäßen Tiertränke. Diese Tiertränke unterscheidet sich von derjenigen des Ausführungsbeispiels der Fig. 1 bis 4 nur durch andere Tränkeventile 48. Im Übrigen entspricht die Tiertränke der Fig. 5 bis 8 derjenigen der Fig. 1 bis 4, weswegen für gleiche Teile gleiche Bezugsziffern verwendet werden.

Insbesondere das Betätigungsmittel 25 und das diesem zugeordnete Übertragungsmittel, das im gezeigten Ausführungsbeispiel auch wieder als eine Kugel 40 ausgebildet ist, entsprechen vor allem hinsichtlich ihrer Funktion dem ersten Ausführungsbeispiel der Fig. 1 bis 4.

Das Tränkeventil 48 der Tiertränke dieses zweiten Ausführungsbeispiels (Fig. 5 bis 8) verfügt über ein Gehäuse 49 aus vorzugsweise rostfreiem Edelstahl, das in die Wasserversorgungsleitung 10 von unten eingeschraubt ist. Im Gehäuse 49 des Tränkeventils 48 befindet sich nur ein Oberstift 50. Das Tränkeventil 48 verfügt über keinen beim Tränkeventil 12 des ersten Ausführungsbeispiels vorhandenen Ventilstift 14. Dieser fehlt beim Tränkeventil 48. Die Funktionen des Ventilstifts 14 werden beim Tränkeventil 48 durch das Betätigungsmittel 25 und das diesem zugeordnete Übertragungsmittel, und zwar die Kugel 40, oder einen anderen Wälzkörper übernommen. Das Betätigungsmittel 25 und das Übertragungsmittel ersetzen somit den Ventilstift 14 des Tränkeventils 12 nach dem ersten Ausführungsbeispiel.

Die Abdichtung des Tränkeventils 48 wird vom Oberstift 50 übernommen. Demzufolge stellt beim Tränkeventil 48 der Oberstift 50 den Ventilkörper dar. Der zylindrische längliche Oberstift 50 ist abgestuft. Korrespondierend dazu ist der Innendurchmesser des Gehäuses 49 abgestuft. Die Abstufungen im Gehäuse 49 und außen am Oberstift 50 korrespondieren derart, dass sie in der in den Fig. 5 bis 6 gezeigten Schließstellung des Tränkeventils 48, wenn die Abstufung am Oberstift 50 auf der Abstufung im Gehäuse 49 anliegt oder aufliegt, ein Dichtsitz 51 gebildet wird. Dieser Dichtsitz 51 entspricht etwa dem Dichtsitz 47 des Tränkeventils 12.

Aufgrund des beim Tränkeventil 48 fehlenden Ventilstifts 14 ist das Übertragungsmittel zur Umsetzung der Schwenkbewegung des Betätigungsmittels 25 zwischen dem Betätigungsmittel 25 und dem Oberstift 50 angeordnet. Das hier auch als Kugel 40 ausgebildete Übertragungsmittel ragt von unten teilweise in das Gehäuse 49 hinein. Die Kugel 40 ist dadurch in einem unteren Bereich des Gehäuses 49 zumindest geführt und gegebenenfalls auch gelagert. Diese Führung bzw. Lagerung der Kugel 40 im Gehäuse 49 erfolgt derart, dass beim Verschwenken des Betätigungsmittels 25 die Kugel 40 auf der Längsmittelachse 19 geradlinig auf- und abbewegbar ist zum Öffnen des Tränkeventils durch Anheben des Oberstifts 50, der dadurch geradlinig auf der Längsmittelachse 19 im Gehäuse 49 hochgedrückt wird.

Das Anheben der Kugel 40 auf einer geradlinigen, senkrechten Bahn auf der Längsmittelachse 19 erfolgt auch bei der Tiertränke dieses zweiten Ausführungsbeispiels durch die mit der mittigen Mulde 38 versehene Führungsbahn 37 auf dem Steg 30 der Gabel 28 des Betätigungsmittels 25. Beim Verschwenken des Betätigungsmittels 25 wälzt sich die Kugel 40 auf der Führungsfläche 39 der Führungsbahn 37 ab, wodurch die Kugel 40 beim Verschwenken des Betätigungsmittels 25 geführt im Gehäuse 49 des Tränkeventils 48 auf- und abbewegbar ist. Dabei wird durch Verschwenken des Betätigungsmittels 25 die Kugel 40 weiter von unten in das Gehäuse 49 hereingedrückt. Wird das Betätigungsmittel 25 losgelassen, geht dieses automatisch in die senkrechte Ausgangsstellung auf der Längsmittelachse 19 zurück, wodurch die Kugel 40 in die tiefste Stelle der Mulde 37 der Führungsbahn 38 zurückkehrt und sich dadurch auf der Längsmittelachse 19 abwärtsbewegt. Dabei senkt sich der Oberstift 50 durch sein Eigengewicht schwerkraftbedingt und somit selbsttätig im Gehäuse 49 so weit ab, dass das Tränkeventil 48 am Dichtsitz 51 zwischen dem Gehäuse 49 und dem Oberstift 50 geschlossen wird. Hierbei liegt die untere Stirnfläche des Oberstifts 50 nicht mehr an der Kugel 40 an, stützt sich insbesondere nicht auf der Kugel 40 ab.

Im Übrigen entspricht die Funktion und die Wirkungsweise der Tiertränke des zweiten Ausführungsbeispiels gemäß den Fig. 5 bis 8 dem ersten Ausführungsbeispiel der Fig. 1 bis 4, worauf hinsichtlich der Gemeinsamkeiten zwischen beiden Ausführungsbeispielen der Erfindung Bezug genommen wird.

**Bezugszeichenliste:**

| | | | |
|---|---|---|---|
| 10 | Wasserversorgungsleitung | 36 | Durchgangsbohrung |
| 11 | Tränkestelle | 37 | Führungsbahn |
| 12 | Tränkeventil | 38 | Mulde |
| 13 | Gehäuse | 39 | Führungsfläche |
| 14 | Ventilstift | 40 | Kugel |
| 15 | Oberstift | 41 | Ventilnadel |
| 16 | Kopf | 42 | Stirnfläche |
| 17 | Dichtfläche | 43 | Führung |
| 18 | Dichtsitz | 44 | Einschnürung |
| 19 | Längsmittelachse | 45 | Einschnürung |
| 20 | Wasserauffangschale | 46 | Nut |
| 21 | tiefste Stelle | 47 | Dichtsitz |
| 22 | Wasseraufnahmemulde | 48 | Tränkeventil |
| 23 | Tragarm | 49 | Gehäuse |
| 24 | Rand | 50 | Oberstift |
| 25 | Betätigungsmittel | 51 | Dichtsitz |
| 26 | Schwenkachse | | |
| 27 | Stange | | |
| 28 | Gabel | | |
| 29 | unteres Ende | | |
| 30 | Steg | | |
| 31 | Schenkel | | |
| 32 | Durchgangsbohrung | | |
| 33 | Lagerzapfen | | |
| 34 | Halterung | | |
| 35 | Rastverschluss | | |

## Patentansprüche

1. Tiertränke für insbesondere Geflügel, mit vorzugsweise mehreren einer strangartigen Wasserversorgungsleitung (10) zugeordneten Tränkeventilen (12), wobei jedes Tränkeventil (12) ein Gehäuse (13) und mindestens einen darin beweglich angeordneten Ventilkörper aufweist, dem ein Betätigungsmittel (25) zugeordnet ist, wodurch der Ventilkörper in mindestens eine das jeweilige Tränkeventil (12) öffnende Stellung bringbar ist, indem vom Betätigungsmittel (25) der mindestens eine Ventilkörper zum Öffnen des Tränkeventils (12) anhebbar ist und mit gegebenenfalls einer einzelnen oder allen Tränkeventilen (12) zugeordneten Wasserauffangschale (20), **dadurch gekennzeichnet, dass** zwischen dem Ventilkörper und dem Betätigungsmittel (25) ein Übertragungsmittel angeordnet ist und durch ein Bewegen des Betätigungsmittels (25) der Ventilkörper im Wesentlichen nur geradlinig anhebbar ist.

2. Tiertränke nach Anspruch 1, **dadurch gekennzeichnet, dass** durch ein Bewegen des Betätigungsmittels (25) der Ventilkörper geradlinig auf einer vertikalen Längsmittelachse (19) des Tränkeventils (12) anhebbar ist.

3. Tiertränke nach Anspruch 1, **dadurch gekennzeichnet, dass** das Übertragungsmittel unter dem Ventilkörper angeordnet ist, vorzugsweise geführt.

4. Tiertränke nach Anspruch 1 oder 3, **dadurch gekennzeichnet, dass** das Betätigungsmittel (25) mindestens eine Führungsbahn (37) aufweist und das Übertragungsmittel mit der Führungsbahn (37) des Betätigungsmittels (25) korrespondiert, vorzugsweise auf der Führungsbahn (37) sich abstützt, aufliegt und/oder abwälzt.

5. Tiertränke nach Anspruch 1 oder 3, **dadurch gekennzeichnet, dass** das Übertragungsmittel als ein Wälzkörper, zum Beispiel eine Kugel (40), ausgebildet ist.

6. Tiertränke nach Anspruch 4, **dadurch gekennzeichnet, dass** eine Rotationsachse des Wälzkörpers bzw. der Kugel (40) des Übertragungsmittels eine Längsmittelachse (19) des Ventilkörpers senkrecht schneidet, vorzugsweise die Rotationsachse des Wälzkörpers bzw. der Kugel (40) horizontal verläuft.

7. Tiertränke nach einem der vorgehenden Ansprüche, **dadurch gekennzeichnet, dass** das Betätigungsmittel (25) um eine Schwenkachse (26) verschwenkbar ist, wobei vorzugsweise die Schwenkachse (26) quer durch die Längsmittelachse (19) des Tränkeventils (12) verläuft, insbesondere horizontal.

8. Tiertränke nach Anspruch 7, **dadurch gekennzeichnet, dass** die Schwenkachse (26) des Betätigungsmittels (25) sich über dem Ventilkörper befindet und/oder ortsunveränderlich relativ zum Tränkeventil (12) ist.

9. Tiertränke nach Anspruch 7 oder 8, **dadurch gekennzeichnet, dass** die horizontale Schwenkachse (26) des Betätigungsmittels (25) beabstandet über dem Übertragungsmittel, insbesondere der Rotationsachse des Wälzkörpers bzw. der Kugel (40) angeordnet ist und/oder die horizontale Schwenkachse (26) und die Rotationsachse parallel zueinander verlaufen, wobei die horizontale Schwenkachse (26) und die horizontale Rotationsachse vorzugsweise senkrecht durch die aufrechte Längsmittelachse (19) des Tränkeventils (12) verlaufen.

10. Tiertränke nach einem der vorgehenden Ansprüche, **dadurch gekennzeichnet, dass** das Betätigungsmittel (25) eine Stange (27) oder ein Rohr und eine Gabel (28) am oberen Ende der Stange (27) bzw. des Rohrs aufweist, wobei vorzugsweise einem mit der Stange (27) oder dem Rohr verbundenen Steg (30) der Gabel (28) die Führungsbahn (37) für das Übertragungsmittel, insbesondere den Wälzkörper oder die Kugel (40), zugeordnet ist.

11. Tiertränke nach Anspruch 10, **dadurch gekennzeichnet, dass** beim unausgelenkten Betätigungsmittel (25) eine Längsmittelachse der Stange (27) oder des Rohrs des Betätigungsmittels (25) auf der Längsmittelachse (19) des Tränkeventils (12) liegt, insbesondere diese nach unten verlängert, und beim unausgelenkten Betätigungsmittel (25) das Tränkeventil (12) geschlossen ist.

12. Tiertränke nach Anspruch 10 oder 11, **dadurch gekennzeichnet, dass** das Betätigungsmittel (25) mit parallelen Schenkeln (31) seiner Gabel (28) auf der Schwenkachse (26) gelagert ist, vorzugsweise an einer mit der Wasserversorgungsleitung (10) verbindbaren Halterung (34).

13. Tiertränke nach einem der vorgehenden Ansprüche, **dadurch gekennzeichnet, dass** einem unteren Endbereich des Tränkeventils (12) eine Führung (43), insbesondere eine Führungshülse, für den nach unten aus dem Gehäuse (13) des Tränkeventils (12) herausragenden unteren Endbereich des Ventilkörpers und/oder das Übertragungsmittel, vorzugsweise den Wälzkörper bzw. die Kugel (40), zugeordnet ist.

14. Tiertränke nach einem der vorgehenden Ansprüche, **dadurch gekennzeichnet, dass** ein freies, unteres Ende des Betätigungsmittels (25), vorzugsweise der Stange (27) bzw. des Rohrs desselben, sich bis in eine Wasseraufnahmemulde (22) der Wasserauffangschale (20) erstreckt und eine Verschwenkung des Betätigungsmittels (25) bzw. der Stange (27) oder des Rohrs durch eine Wandung der Wasseraufnahmemulde (22) begrenzbar ist.

## Claims

1. Animal drinker for in particular poultry, having preferably a plurality of drinking valves (12) assigned to a line-like water supply pipe (10), wherein each drinking valve (12) has a housing (13) and at least one valve body arranged in a movable manner therein, said valve body being assigned an actuating means (25), by way of which the valve body can be moved into at least one position opening the respective drinking valve (12) in that the at least one valve body for opening the drinking valve (12) is liftable by the actuating means (25), and having, if required, a water-collecting bowl (20) assigned to a single or all drinking valves (12), **characterized in that** a transmission means is arranged between the valve body and the actuating means (25) and **in that** the valve body is liftable substantially only in a rectilinear manner by the actuating means (25) being moved.

2. Animal drinker according to Claim 1, **characterized in that** the valve body is liftable in a rectilinear manner on a vertical longitudinal centre axis (19) of the drinking valve (12) by the actuating means (25) being moved.

3. Animal drinker according to Claim 1, **characterized in that** the transmission means is arranged, preferably guided, under the valve body.

4. Animal drinker according to Claim 1 or 3, **characterized in that** the actuating means (25) has at least one guide track (37) and **in that** the transmission means corresponds to the guide track (37) of the actuating means (25), preferably being supported, lying or rolling on the guide track (37).

5. Animal drinker according to Claim 1 or 3, **characterized in that** the transmission means is in the form of a rolling body, for example a sphere (40).

6. Animal drinker according to Claim 4, **characterized in that** a rotation axis of the rolling body or of the sphere (40) of the transmission means perpendicularly intersects a longitudinal centre axis (19) of the valve body, the rotation axis of the rolling body or of the sphere (40) preferably extending horizontally.

7. Animal drinker according to one of the preceding claims, **characterized in that** the actuating means (25) is pivotable about a pivot axis (26), wherein preferably the pivot axis (26) extends transversely, preferably horizontally, through the longitudinal centre axis (19) of the drinking valve (12).

8. Animal drinker according to Claim 7, **characterized in that** the pivot axis (26) of the actuating means (25) is located above the valve body and/or is fixed in position relative to the drinking valve (12).

9. Animal drinker according to Claim 7 or 8, **characterized in that** the horizontal pivot axis (26) of the actuating means (25) is arranged at a distance above the transmission means, in particular above the rotation axis of the rolling body or of the sphere (40) and/or the horizontal pivot axis (26) and the rotation axis extend in a manner parallel to one another, wherein the horizontal pivot axis (26) and the horizontal rotation axis extend preferably perpendicularly through the upright longitudinal centre axis (19) of the drinking valve (12).

10. Animal drinker according to one of the preceding claims, **characterized in that** the actuating means (25) has a rod (27) or a tube and a fork (28) at the upper end of the rod (27) or tube, wherein preferably the guide track (37) for the transmission means, in particular the rolling body or the sphere (40), is assigned to a crosspiece (30) of the fork (28) connected to the rod (27) or the tube.

11. Animal drinker according to Claim 10, **characterized in that** when the actuating means (25) is not deflected, a longitudinal centre axis of the rod (27) or of the tube of the actuating means (25) is located on the longitudinal centre axis (19) of the drinking valve (12), in particular extending the latter downwards, and when the actuating means (25) is not deflected, the drinking valve (12) is closed.

12. Animal drinker according to Claim 10 or 11, **characterized in that** the actuating means (25) is mounted on the pivot axis (26) by way of parallel legs (31) of its fork (28), preferably on a holder (34), which is connectable to the water supply pipe (10).

13. Animal drinker according to one of the preceding claims, **characterized in that** a lower end region of the drinking valve (12) is assigned a guide (43), in particular a guide sleeve, for the lower end region, projecting downwardly out of the housing (13) of the drinking valve (12), of the valve body, and/or for the transmission means, preferably the rolling body or the sphere (40).

14. Animal drinker according to one of the preceding claims, **characterized in that** a free, lower end of the actuating means (25), preferably of the rod (27) or tube of same, extends into a water-accommodating hollow (22) of a water-collecting bowl (20), and a pivoting of the actuating means (25), or of the rod (27) or tube, is limitable by a wall of the water-accommodating hollow (22).

## Revendications

1. Abreuvoir, en particulier pour volaille, comprenant de préférence plusieurs robinets d'abreuvoir (12) associés à une conduite d'alimentation en eau en forme de boyau (10), chaque robinet d'abreuvoir (12) présentant un boîtier (13) et au moins un corps de robinet disposé de manière déplaçable dans celui-ci, auquel est associé un moyen d'actionnement (25), de sorte que le corps de robinet puisse être amené dans au moins une position ouvrant le robinet d'abreuvoir respectif (12), par le fait que l'au moins un corps de robinet peut être soulevé par le moyen d'actionnement (25) pour ouvrir le robinet d'abreuvoir (12) et comprenant éventuellement une cuvette de collecte d'eau (20) associée à des robinets d'abreuvoir individuels ou à la totalité des robinets d'abreuvoir (12), **caractérisé en ce qu'**entre le corps de robinet et le moyen d'actionnement (25) est disposé un moyen de transfert et par un déplacement du moyen d'actionnement (25), le corps de robinet peut être soulevé essentiellement uniquement en ligne droite.

2. Abreuvoir selon la revendication 1, **caractérisé en ce que** par un déplacement du moyen d'actionnement (25), le corps de robinet peut être soulevé en ligne droite sur un axe médian longitudinal vertical (19) du robinet d'abreuvoir (12).

3. Abreuvoir selon la revendication 1, **caractérisé en ce que** le moyen de transfert est disposé, de préférence guidé, sous le corps de robinet.

4. Abreuvoir selon la revendication 1 ou 3, **caractérisé en ce que** le moyen d'actionnement (25) présente au moins une piste de guidage (37) et le moyen de transfert correspond à la piste de guidage (37) du moyen d'actionnement (25), de préférence s'appuie, repose et/ou roule sur la piste de guidage (37).

5. Abreuvoir selon la revendication 1 ou 3, **caractérisé en ce que** le moyen de transfert est réalisé sous forme de corps de roulement, par exemple une bille (40).

6. Abreuvoir selon la revendication 4, **caractérisé en ce qu'**un axe de rotation du corps de roulement ou de la bille (40) du moyen de transfert coupe perpendiculairement un axe médian longitudinal (19) du corps de robinet, de préférence l'axe de rotation du corps de roulement ou de la bille (40) s'étend horizontalement.

7. Abreuvoir selon l'une quelconque des revendications précédentes, **caractérisé en ce que** le moyen d'actionnement (25) peut pivoter autour d'un axe de pivotement (26), l'axe de pivotement (26) s'étendant de préférence transversalement à l'axe médian longitudinal (19) du robinet d'abreuvoir (12), en particulier horizontalement.

8. Abreuvoir selon la revendication 7, **caractérisé en ce que** l'axe de pivotement (26) du moyen d'actionnement (25) se trouve au-dessus du corps de robinet et/ou est immobile par rapport au robinet d'abreuvoir (12).

9. Abreuvoir selon la revendication 7 ou 8, **caractérisé en ce que** l'axe de pivotement horizontal (26) du moyen d'actionnement (25) est disposé à distance au-dessus du moyen de transfert, notamment au-dessus de l'axe de rotation du corps de roulement ou de la bille (40) et/ou l'axe de pivotement horizontal (26) et l'axe de rotation s'étendent parallèlement l'un à l'autre, l'axe de pivotement horizontal (26) et l'axe de rotation horizontal s'étendant de préférence perpendiculairement à travers l'axe médian longitudinal vertical (19) de l'abreuvoir (12) .

10. Abreuvoir selon l'une quelconque des revendications précédentes, **caractérisé en ce que** le moyen d'actionnement (25) présente une tige (27) ou un tube et une fourche (28) à l'extrémité supérieure de la tige (27) ou du tube, la piste de guidage (37) pour le moyen de transfert, en particulier pour le corps de roulement ou la bille (40), étant associée de préférence à une nervure (30) de la fourche (28) connectée à la tige (27) ou au tube.

11. Abreuvoir selon la revendication 10, **caractérisé en ce que** lorsque le moyen d'actionnement n'est pas dévié (25), un axe médian longitudinal de la tige (27) ou du tube du moyen d'actionnement (25) est situé sur l'axe médian longitudinal (19) du robinet d'abreuvoir (12), en particulier prolonge celui-ci vers le bas, et lorsque le moyen d'actionnement (25) n'est pas dévié, le robinet d'abreuvoir (12) est fermé.

12. Abreuvoir selon la revendication 10 ou 11, **caractérisé en ce que** le moyen d'actionnement (25) est supporté sur l'axe de pivotement (26) avec des branches parallèles (31) de sa fourche (28), de préférence sur un support (34) pouvant être connecté à la conduite d'alimentation en eau (10).

13. Abreuvoir selon l'une quelconque des revendications précédentes, **caractérisé en ce qu'**un guide (43), en particulier une douille de guidage, pour la région d'extrémité inférieure du corps de robinet faisant saillie vers le bas hors du boîtier (13) du robinet d'abreuvoir (12) et/ou pour le moyen de transfert, de préférence le corps de roulement ou la bille (40), est associé à une région d'extrémité inférieure du robinet d'abreuvoir (12).

14. Abreuvoir selon l'une quelconque des revendications précédentes, **caractérisé en ce qu'**une extrémité inférieure libre du moyen d'actionnement (25), de préférence de la tige (27) ou du tube de celui-ci, s'étend jusque dans une cavité de collecte d'eau (22) de la cuvette de collecte d'eau (20) et un pivotement du moyen d'actionnement (25) ou de la tige (27) ou du tube peut être limité par une paroi de la cavité de collecte d'eau (22).
